# EUROPEAN PATENT APPLICATION

(11) **EP 2 404 802 A1**
(43) Date of publication of application: **11.01.2012**
(21) Application number: 09841111.9
(22) Date of filing: 06.03.2009
(51) Int. Cl.: B60W 10/26, B60K 6/445, B60L 11/14, B60W 20/00

(54) **HYBRID VEHICLE CONTROL DEVICE AND CONTROL METHOD**

(71) Applicant: Toyota Jidosha Kabushiki Kaisha, Toyota-shi, Aichi 471-8571 (JP)
(72) Inventor: ISHISHITA, Teruo, Toyota-shi Aichi 471-8571 (JP)
(74) Representative: Intès, Didier Gérard André
(86) International application number: PCT/JP2009/054250
(87) International publication number: WO 2010/100748

(57) **Abstract**

A charge/discharge power upper limit value (Win#, Wout#) is set by referencing different maps (432, 434) for a catalyst warm-up period and other period so as to limit charge/discharge of a main battery in accordance with increase of the battery temperature (Tb). As a result, during the catalyst warm-up period, a limit start temperature (T1s) at which a limit of the charge/discharge power is started and a charge/discharge inhibit temperature (T1p) at which the charge/discharge is inhibited are set in accordance with the characteristic of the main battery. During a period other than the catalyst warm-up period, the limit start temperature (T2s) and the charge/discharge inhibit temperature (T2p) are set lower than during the catalyst warm-up period.

## Description

### TECHNICAL FIELD

The present invention relates to a controller and a control method for a hybrid vehicle and, more specifically, to charge/discharge control of a power storage device mounted on the vehicle for executing smooth warm-up of engine catalyst.

### BACKGROUND ART

In a vehicle mounting an engine, a catalyst (catalytic converter) for purifying exhaust gas from the engine is generally provided. The catalyst removes emission (harmful substance such as HC, CO and NOx) in the exhaust gas. For the catalyst to fully exhibit the emission purifying function, warm-up to have the catalyst temperature increased to be not lower than an activating temperature is indispensable.

In a hybrid vehicle mounting an engine and a motor as sources of running and driving power, engine start request is made in accordance with running conditions. If the catalyst temperature is lower than the activating temperature mentioned above when the engine start request is made, the catalyst must be warmed-up immediately. Further, running control that can reduce as much as possible the amount of emission during catalyst warm-up is desired.

By way of example, Japanese Patent Laying-Open No. 2002-89316 (PTL 1) describes vehicle control for quickly heating an emission purifying device. Specifically, when a catalytic converter is to be warmed-up, a power generation instruction is issued to a motor generator, requesting engine output to increase engine torque. Consequently, temperature of exhaust gas from the engine is increased and, hence, the catalytic converter can be activated quickly while preventing noise caused by high engine speed.
PTL 1: Japanese Patent Laying-Open No. 2002-89316

### SUMMARY OF INVENTION

### TECHNICAL PROBLEM

In a hybrid vehicle, since a motor is mounted as a source of driving power in addition to the engine, such a running control is possible that ensures the vehicle driving power by the motor output without using engine output during catalyst warm-up. With such a control, it becomes possible to adjust engine operating conditions to be specifically focused on catalyst warm-up, giving higher priority to increase of exhaust gas temperature than output stability. On the other hand, a secondary battery used as a typical power storage device on a vehicle generates heat as it is charged/discharged. Therefore, charge/discharge is generally limited in accordance with the increase of battery temperature.

The inventors noticed that, where a lithium ion battery known to require strict management against overcharge/over-discharge is applied, it is necessary to strictly limit charge/discharge power if the battery temperature increases, even during catalyst warm-up of relatively short time period. Specifically, the inventors found a problem that, if the above-described limitation of charge/discharge occurs during catalyst warm-up, successful completion of catalyst warm-up becomes difficult, possibly leading to increased amount of emission.

As a result, the inventors have come to realize that, in order to reliably ensure catalyst warm-up in a hybrid vehicle, such charge/discharge control is required that can reliably protect the power storage device (typically a secondary battery) mounted on the vehicle by strictly limiting charge/discharge to prevent temperature increase and that avoids such limitation of charge/discharge at the time of catalyst warm-up to allow effective use of stored power.

The present invention was made to solve the above-described problem and its object is to reliably execute battery protection of preventing temperature increase of secondary battery mounted on a hybrid vehicle and, in addition, to execute normal catalyst warm-up without causing limitation of charge/discharge of the secondary battery, and thereby to reliably prevent worsening of emission characteristic.

### SOLUTION TO PROBLEM

The present invention provides a controller for a hybrid vehicle mounting an engine and an electric motor capable of generating vehicle driving power, a catalyst provided on an exhaust system of the engine, and a secondary battery configured to store electric power for driving the electric motor, including: a monitor unit configured to detect temperature of the secondary battery; and a charge/discharge limit setting unit configured to limit charge/discharge of the secondary battery depending on battery temperature detected by the monitor unit increases. The charge/discharge limit setting unit starts limitation of charge/discharge power of the secondary battery if the battery temperature becomes higher than a first temperature in a first time period in which catalyst warm-up is done by exhaust of the engine, and starts limitation of the charge/discharge power if the battery temperature becomes higher than a second temperature lower than the first temperature, in a second time period other than the time period of the catalyst warm-up.

The present invention provides a method of controlling a hybrid vehicle including the engine, electric motor, catalyst and secondary battery as described above, including the steps of: detecting battery temperature of the secondary battery; setting a first temperature condition to start limitation of charge/discharge power of the secondary battery if the battery temperature becomes higher than a first temperature in a first time period in which catalyst warm-up is done by exhaust of the engine; and setting a second temperature condition to start limitation of the charge/discharge power if the battery temperature becomes higher than a second temperature lower than the first temperature, in a second time period other than the time period of the catalyst warm-up.

By the above-described controller and control method for a hybrid vehicle, in a period other than the catalyst warm-up period, charge/discharge limitation starts from a temperature range relatively lower than in the catalyst warm-up period. Therefore, the battery temperature at the start of catalyst warm-up can be prevented from reaching the temperature range in which charge/discharge is limited in the catalyst warm-up period. As a result, while the charge/discharge is reliably limited to prevent excessive increase of battery temperature, normal catalyst warm-up can be executed without imposing charge/discharge limitation of the secondary battery.

Preferably, the charge/discharge limit setting unit inhibits charge/discharge of the secondary battery if the battery temperature becomes higher than a third temperature in the first time period, and inhibits charge/discharge of the secondary battery if the battery temperature becomes higher than a fourth temperature in the second time period. The step of setting the first temperature condition further sets the first temperature condition to inhibit charge/discharge of the secondary battery if the battery temperature becomes higher than a third temperature in the first time period; and the step of setting the second temperature condition further sets the second temperature condition to inhibit charge/discharge of the secondary battery if the battery temperature becomes higher than a fourth temperature in the second time period. The third temperature is higher than the first temperature; and the fourth temperature is higher than the second temperature and lower than the third temperature.

By such an approach, charge/discharge is inhibited when the temperature is high and, therefore, excessive increase of battery temperature can reliably be prevented. Therefore, in the catalyst warm-up period, the battery can more reliably be protected, and other than in the catalyst warm-up period, battery temperature increase can more reliably be prevented.

More preferably, the fourth temperature is set lower than the first temperature. With such setting, other than in the catalyst warm-up period, battery temperature increase can be reduced so as not to reach the temperature range in which charge/discharge is limited in the catalyst warm-up period. As a result, normal catalyst warm-up can more reliably be executed.

Further preferably, the secondary battery is provided with a cooling system configured to reduce temperature increase. The difference between the first and second temperatures or the difference between the third and fourth temperatures is set to be larger than expected amount of temperature increase of the secondary battery in the first time period if the cooling system fails.

With such setting, even if the cooling system (such as a cooling fan) for the secondary battery should fail and battery temperature inevitably increase during catalyst warm-up, temperature conditions for charge/discharge limitation in the period other than the catalyst warm-up period can be set to prevent the battery temperature from increasing to the range that causes the charge/discharge limitation of secondary battery in the catalyst warm-up period.

Preferably, the third temperature corresponds to management upper limit value of the battery temperature determined in accordance with characteristics of the secondary battery.

Therefore, even in the catalyst warm-up period, charge/discharge can be inhibited if the battery temperature should exceed the management upper limit and, hence, the secondary battery can surely be protected.

Preferably, the hybrid vehicle further mounts a charging unit configured to charge the secondary battery by a power source outside the vehicle. The second time period includes a charging period for charging the secondary battery by the charging unit.

Therefore, even when the secondary battery mounted on the vehicle has been charged by a power source external to the vehicle before starting vehicle operation, catalyst warm-up can normally be executed without causing charge/discharge limitation of the secondary battery.

Preferably, the hybrid vehicle further mounts a generator configured to be capable of generating electric power using power from the engine. In the first time period, output of the engine is set to include power to be used for electric power generation by the generator.

Therefore, by increasing the engine output in the catalyst warm-up period, catalyst warm-up can be completed quickly. As a result, temperature increase of the secondary battery in the catalyst warm-up period can be reduced and, hence, the temperature (second temperature) to start charge/discharge limitation or the temperature (fourth temperature) to inhibit charge/discharge in the period other than the catalyst warm-up period, can be set relatively high. As a result, more effective use of the secondary battery in a period other than the catalyst warm-up period can be realized.

Preferably, in the first time period, driving power of the hybrid vehicle is ensured by output of the electric motor, while output of the engine is set to a minimum value necessary for the catalyst warm-up.

Therefore, during catalyst warm-up, the vehicle runs without using the engine output and, hence, the conditions for operating the engine can be set to be suitable for catalyst warm-up, and the amount of exhaust emission from the engine in the catalyst warm-up period can be reduced. As a result, exhaust emission can be reduced.

Preferably, the charge/discharge limit setting unit is configured to smooth change in limit value of the charge/discharge power in the direction of time axis, in at least one of transitions between the first and second time periods.

In this manner, abrupt change in the charge/discharge power limit value between the catalyst warm-up period and other period can be prevented. Thus, smooth charge/discharge control is realized.

### ADVANTAGEOUS EFFECTS OF INVENTION

According to the present invention, battery protection of preventing temperature increase of secondary battery mounted on a hybrid vehicle is reliably executed and, in addition, normal catalyst warm-up is executed without causing limitation of charge/discharge of the secondary battery, so that worsening of emission characteristic can reliably be prevented.

### BRIEF DESCRIPTION OF DRAWINGS

Fig. 1 its a block diagram showing an exemplary configuration of a hybrid vehicle mounting the controller in accordance with an embodiment of the present invention.
Fig. 2 illustrates in detail the structure of an engine shown in Fig. 1.
Fig. 3 is a functional block diagram illustrating charge/discharge control of a main battery 310 in the hybrid vehicle shown in Fig. 1.
Fig. 4 shows an idea of charge/discharge control related to battery temperature increase, in accordance with an embodiment.
Fig. 5 is a chart representing the process for setting an upper limit of charge/discharge power in the charge/discharge control of the hybrid vehicle in accordance with an embodiment of the present invention.
Fig. 6 shows an idea of charge/discharge limitation with respect to the battery temperature increase in accordance with a comparative example of an embodiment.
Fig. 7 is a diagram of waveforms showing exemplary battery temperature changes when charge/discharge is controlled in accordance with the charge/discharge limitation of a comparative example (when cooling system is operating normally).
Fig. 8 is a diagram of waveforms showing exemplary battery temperature changes when charge/discharge is controlled in accordance with the charge/discharge limitation of the comparative example (when cooling system failed).
Fig. 9 is a diagram of waveforms showing exemplary battery temperature changes when charge/discharge is controlled in accordance with the charge/discharge limitation of an embodiment of the invention (when cooling system failed).
Fig. 10 is a flowchart representing settings of operation conditions in the catalyst warm-up period.

### REFERENCE SIGNS LIST

10 hybrid vehicle, 12 driving wheel, 14 reduction gear, 16 driving shaft, 100 engine, 102 combustion chamber, 104 injector, 106 ignition coil, 108 engine water temperature sensor, 110 intake pipe, 112 throttle motor, 114 throttle valve, 116 air flow meter, 118 intake air temperature sensor, 120 exhaust pipe, 122 air-fuel ratio sensor, 124 oxygen sensor, 140 catalyst, 200 power split device, 212 output shaft, 300A motor generator (MG(1)), 300B motor generator (MG(2)), 310 main battery, 315 cooling system (main battery), 320 step-up converter, 330 inverter, 340 monitor unit (main battery), 400 ECU, 402 MG_ECU, 404 HV_ECU, 406 engine ECU, 410 SOC estimating unit, 420 charge/discharge limit setting unit, 430 battery temperature limitation map, 432 map for a period other than catalyst warm-up period, 434 map for catalyst warm-up period, 450 total power calculating unit, 460 distribution control unit, 500 external charging unit, 510 charging inlet, 520 charger, 530 charging cable, 540 charging outlet, 600 external power source, FWR flag (catalyst warm-up in progress), Ib battery current, Pb charging/discharging power, T1s limitation start temperature (in the catalyst warm-up period), T1p start temperature (in the catalyst warm-up period), T2p charge/discharge inhibiting temperature (other than the catalyst warm-up period), T2s limitation start temperature (other than the catalyst warm-up period), Tb battery temperature, Tth catalyst warm-up suspending temperature, Vb battery voltage, Win upper limit of charging power, Win# upper limit of charging power, Wout upper limit of discharging power, Wout# upper limit of discharging power, ΔTs, ΔTp margin, ΔTw expected amount of temperature increase (in the catalyst warm-up period).

### DESCRIPTION OF EMBODIMENTS

In the following, embodiments of the present invention will be described in detail with reference to the figures. In the following, the same or corresponding portions in the figures are denoted by the same reference characters and, basically, description thereof will not be repeated.

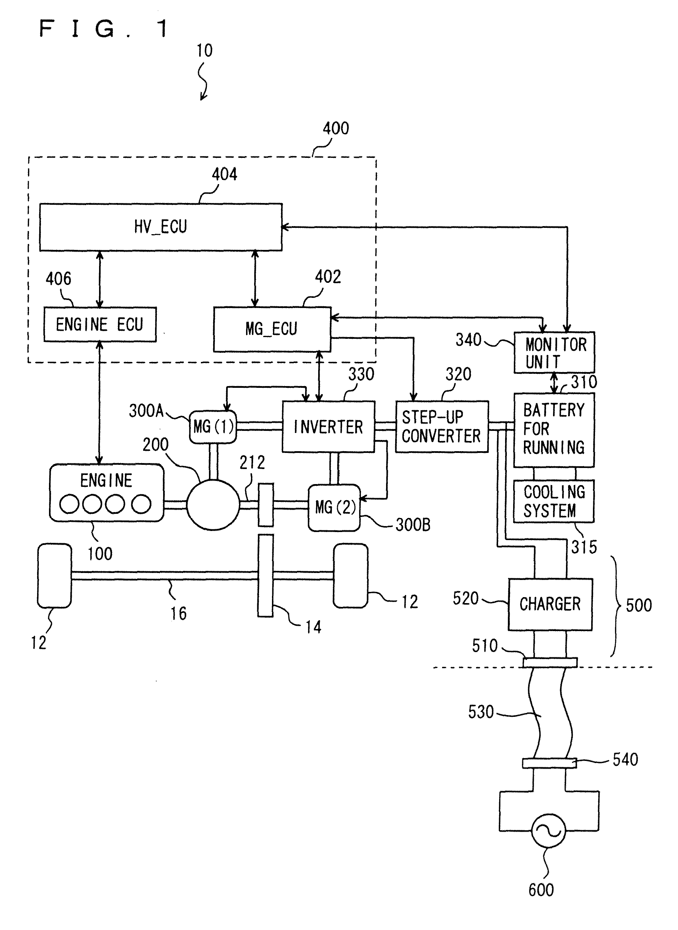

Fig. 1 is a block diagram showing an exemplary configuration of a hybrid vehicle mounting the controller in accordance with an embodiment of the present invention. It is noted that the present invention is applicable to hybrid vehicles having any configuration provided that the vehicle involves catalyst warm-up and that the vehicle can run using electric power from a secondary battery mounted on the vehicle in the catalyst warm-up period.

Referring to Fig. 1, a hybrid vehicle 10 includes driving wheels 12, a reduction gear 14, a driving shaft 16, an engine 100, a power split device 200, motor generators 300A (MG(1)) and 300B (MG(2)), and a main battery 310 storing power for driving motor generators 300A and 300B.

Each of motor generators 300A and 300B is typically formed of a permanent magnet type three-phase AC synchronous motor, configured to be operable both as a motor and a generator under torque control.

Power split device 200 is coupled to an output shaft of engine 100, an output shaft of motor generator 300A and to an output shaft 212. Output shaft 212 is coupled to an output shaft of motor generator 300B. Further, between driving shaft 15 driving driving wheels 12 and output shaft 212, reduction gear 14 is provided. Thus, it is possible to transmit torque of output shaft 212 coming from motor generators 300A and 300B or engine 100 to driving wheels 12 with a prescribed reduction ratio, and to transmit torque of driving wheels 12 to motor generator 300B through output shaft 212.

The output of engine 100 is distributed by power split device 200 to output shaft 212 and motor generator 300A. When controlled to output negative torque, motor generator 300A can operate as a power generator using power from engine 100. The power output from motor generator 300A can be used for charging main battery 310 and/or for driving motor generator 300B.

Further, at the time of starting operation of engine 100, motor generator 300A can operate as an electric motor, to be used as a starter of engine 100.

Hybrid vehicle 10 runs using power from at least one of engine 100 and motor generator 300B. Specifically, hybrid vehicle 10 can run using only the output of motor generator 300B operating as an electric motor. Further, motor generator 300B operates as a power generator at the time of regenerative braking, to generate power for charging main battery 310. At this time, the kinetic energy of the vehicle is converted to electric energy and regenerative braking power (regenerative brake) is generated, so that speed of hybrid vehicle 10 decreases.

Further, since output shafts of engine 100, motor generator 300A and motor generator 300B are coupled by means of power split device 200, it is also possible to continuously control the ratio (reduction ratio) between the torque of engine 100 and the torque of output shaft 212 during running.

Hybrid vehicle 10 additionally includes: a cooling system 315 and a monitor unit 340 for main battery 310; an up-converter 320; an inverter 330; an MG (Motor Generator)_ECU (Electronic Control Unit) 402; an HV (Hybrid Vehicle)_ECU 404; and an engine ECU 406.

Main battery 310 is formed of a nickel hydride or lithium ion secondary battery. As will be clearly understood from the following description, the present invention is suitable for a secondary battery that requires strict control of temperature increase caused by overcharge or over-discharge, such as a lithium ion battery.

Monitor unit 340 monitors the state of main battery 310 (such as voltage across terminals (battery voltage) Vb, battery current Ib and battery temperature Tb). Cooling system 315 is formed to include a cooling fan (not shown) for feeding cooling medium such as cooling air to a cooling passage of main battery 310. Generally, operation of cooling system 315 is controlled in accordance with battery temperature Tb.

Inverter 330 is for bi-directional power conversion between AC power input to/output from motor generators 300A, 300B and DC power input to/output from main battery 310. Inverter 330 generally represents, by one block, inverters separately provided for motor generators 300A and 300B, respectively.

Step-up converter 320 executes bi-directional DC voltage conversion between

DC link voltage (corresponding to the AC voltage amplitude of motor generators 300A, 300B) of inverter 330 and output voltage of main battery 310. As a result, rated voltage of motor generators 300A and 300B can be made higher than the rated voltage of main battery 310 and, therefore, efficiency of motor drive control can be improved.

MG_ECU 402 controls motor generator 300, inverter 330 and state of charge of main batter 310, in accordance with the state of hybrid vehicle 10. Engine ECU 406 controls state of operation of engine 100. HV_ECU 404 manages and controls engine ECU 406 and MG_ECU 402 alternately and thereby controls the hybrid system as a whole, such that most efficient operation of hybrid vehicle 10 is realized.

Each ECU is formed of an electronic control unit including a CPU (Central Processing Unit) and a memory, not shown, and configured to perform operations using values detected by various sensors, based on maps and programs stored in the memory. Alternatively, at least part of the ECU may be configured to execute prescribed numerical processing/logical operation using hardware such as an electronic circuit.

Though ECUs are shown as separately provided in Fig. 1, two or more ECUs may be integrated to be one ECU. By way of example, as represented by dotted lines in Fig. 1, MG_ECU 402, HV_ECU 404 and engine ECU 406 may be provided as an integrated ECU 400. In the following, MG_ECU 402, HV_ECU 404 and engine ECU 406 are not distinguished from each other and generally referred to as ECU 400.

To ECU 400, signals indicating state values (voltage across terminals Vb, battery current Ib, battery temperature Tb and the like) of main battery 310 or indicating occurrence of a malfunction, from a vehicle speed sensor, an accelerator pedal position sensor, a throttle opening position sensor, torque sensors and current sensors of motor generators 300A and 300B, an engine speed sensor (all not shown) as well as from monitor unit 340 are input.

Further, hybrid vehicle 10 may be configured to include an external charging function, by which main battery 310 can be charged using a power source 600 outside of the vehicle. To realize the external charging function, hybrid vehicle 10 includes an external charging unit 500.

External charging unit 500 includes a charging inlet 510 and a charger 520. At the time of charging from the external power source (hereinafter also referred to as at the time of external charging), charging inlet 510 is electrically connected to charging outlet 540 of external power source 600 through a prescribed charging cable 530. Charger 520 converts the power supplied from external power source 600 to electric power suitable for charging main battery 310.

Alternatively, in place of the configuration shown in Fig. 1, the power supplied from an external power source may be received by a configuration in which electric power is supplied through non-contact, electromagnetic coupling between the external power source and hybrid vehicle 10, specifically, a configuration in which a primary coil is provided on the side of charging outlet 540 of external power source 600 and a secondary coil is provided on the side of charging inlet, and electric power is supplied utilizing mutual inductance between the primary and secondary coils. It is noted that, as a matter of course, the present invention is applicable to a hybrid vehicle not having the external charging function.

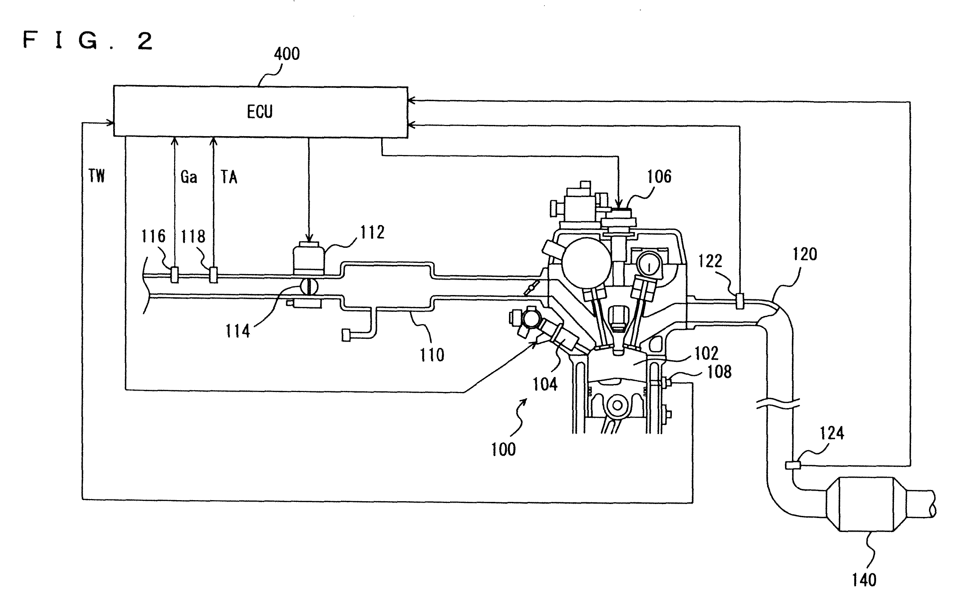

Fig. 2 illustrates in detail the structure of engine shown in Fig. 1.

Referring to Fig. 2, in engine 100, air introduced through an air cleaner (not shown) flows through an intake pipe 110 and introduced to a combustion chamber 102 of engine 100. The amount of air introduced to combustion chamber 102 is adjusted by the opening position (throttle opening position) of throttle valve 114. The throttle opening position is controlled by a throttle motor 112 operating based on a signal from ECU 400.

The fuel is stored in a fuel tank (not shown), and injected by an injector 104 to combustion chamber 102 through a fuel pump (not shown). Mixture of air introduced from intake pipe 110 and the fuel injected by injector 104 is ignited by an ignition coil 106 controlled by a control signal from ECU 400, and burns.

After burning of air-fuel mixture, exhaust gas is emitted to the atmosphere through catalyst 140 provided in exhaust pipe 120.

Catalyst 140 is a ternary catalyst purifying emission (harmful substance such as carbon hydride (HC), carbon monoxide (CO) and nitrogen oxide (NOx)) contained in the exhaust gas. Catalyst 140 carries precious metal including platinum, palladium and rhodium added to alumina base, and capable of simultaneously invoking oxidation reaction of carbon hydride and carbon monoxide and reduction reaction of nitrogen oxide. Catalyst 140 tends to exhibit higher exhaust purifying capability as its temperature increases.

To ECU 400, signals from an engine water temperature sensor 108, an air flow meter 116, an intake air temperature sensor 118, an air-fuel ratio sensor 122 and oxygen sensor 124 are input.

Engine water temperature sensor 108 detects the temperature of engine cooling water (engine water temperature) TW. Air flow meter 116 is provided on intake pipe 110 on the upstream side of throttle valve 114 and detects an amount of intake air (amount of air per unit time taken into engine 100) Ga. Intake air temperature sensor 118 detects temperature of intake air (intake air temperature) TA. Air-fuel ratio sensor 122 detects the ratio between air and fuel in the exhaust gas. Oxygen sensor 124 detects oxygen concentration in the exhaust gas. These sensors transmit signals indicating results of detection to ECU 400.

ECU 400 controls engine 100 such that desired state of running of hybrid vehicle 10 is attained, based on the signals transmitted from the various sensors and the maps and programs stored in the ROM. By way of example, ECU 400 controls ignition coil 106 such that an appropriate ignition timing is realized, and controls throttle motor 112 to attain an appropriate throttle opening position. Further, ECU 400 controls injector 104 such that appropriate amount of fuel is injected, based on signals from the sensors. Specifically, it feed-back controls the amount of fuel injection such that air-fuel ratio attains to an appropriate value, based on signals from air-fuel ratio sensor 122 and oxygen sensor 124.

As described above, hybrid vehicle 10 is capable of running only with the power from motor generator 300B. Therefore, hybrid vehicle 10 is controlled such that engine 100 is operated/stopped in accordance with the state of vehicle and the state of running.

On the other hand, catalyst 140 has such a characteristic that it exhibits higher exhaust purifying capability as the catalyst temperature increases. Therefore, in order to ensure satisfactory exhaust purifying capability, the catalyst temperature must be higher than a prescribed temperature (activating temperature). Therefore, when start of operation of engine 100 is requested, the catalyst temperature is checked, and if the catalyst temperature is lower than the prescribed temperature mentioned above, catalyst warm-up operation is executed until the catalyst temperature exceeds the prescribed temperature. The catalyst temperature may be actually measured using a temperature sensor (not shown), or may be estimated by ECU 400 based on the temperature and volume of exhaust gas that can be estimated from engine state as well as heat capacity of catalyst 140.

In the catalyst warm-up operation, basically, the vehicle driving power is ensured by the output of motor generator 300B, while the output of engine 100 is reduced to the lowest output necessary for warming up the catalyst. As a result, the amount of exhaust gas can be reduced in the period of low catalyst temperature in which exhaust purifying capability is low. Further, since it is unnecessary to cover the vehicle driving power, engine operating conditions specifically focused on catalyst warm-up can be set. By way of example, retarded ignition to increase the temperature of exhaust gas reduces the time necessary for the catalyst warm-up operation.

To enable the catalyst warm-up operation as described above, it is necessary that motor generator 300B surely provide the vehicle driving power requested by the user. Therefore, it is necessary that charging/discharging power of main battery 310 be fully used in the catalyst warm-up period. In other words, if charging/discharging should be limited or inhibited as the temperature of main battery 310 increases and the vehicle driving power provided by motor generator 300B should become insufficient, the vehicle driving power must be generated by engine 100 and, therefore, the catalyst warm-up operation as described above must be stopped. As a result, emission exhaust may possibly be worsened.

Therefore, in the hybrid vehicle control in accordance with the present invention, in order to reliably ensure battery protection involving charge/discharge limitation/inhibition in view of temperature and to execute catalyst warm-up in a normal manner without causing the charge/discharge limitation of main battery 310, the following charge/discharge control is executed.

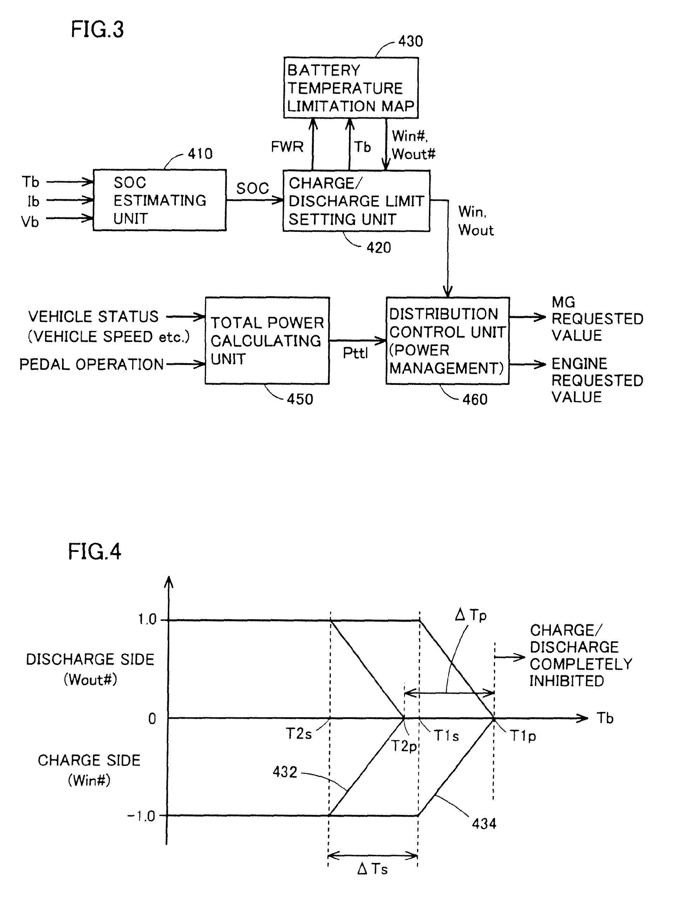

Fig. 3 is a block diagram illustrating charge/discharge control of main battery 310 in hybrid vehicle 10.

Referring to Fig. 3, ECU 400 includes an SOC (State Of Charge) estimating unit 410, a charge/discharge limit setting unit 420, a battery temperature limitation map 430, a total power calculating unit 450, and a distribution control unit 460.

SOC estimating unit 410 generates SOC indicating the remaining capacity of main battery 310, at least partially based on battery temperature Tb, battery current Ib and battery voltage Vb of main battery 310. SOC typically is a percentage representation of the remaining capacity to the fully charged state.

Charge/discharge limit setting unit 420 sets charge/discharge power upper limit values Win and Wout, mainly in accordance with the current SOC and battery temperature Tb. As will be described later, running of hybrid vehicle 10 is controlled such that charge/discharge of main battery 310 is within the range between Win and Wout.

Charge/discharge limit setting unit 420 obtains charge/discharge limit values

Win# and Wout# to cope with the increase in battery temperature, in accordance with battery temperature limitation map 430 storing temperature conditions of charge/discharge limitation with respect to the battery temperature. Then, charge/discharge limit setting unit 420 sets final charge/discharge power upper limit values Win and Wout, taking into consideration other factors such as SOC. Specifically, even if charge/discharge limitation is unnecessary from the viewpoint of battery temperature, the charge/discharge may be limited with absolute value of Win and Wout set low, considering other conditions such as SOC attaining closer to the upper/lower limit.

Total power calculating unit 450 calculates the vehicle driving power and vehicle braking power required by hybrid vehicle 10 as a whole (PttI), based on the pedal operations by the driver including accelerator and brake operations and status of the vehicle such as the vehicle speed. Then, distribution control unit 460 generates MG request values to motor generators 300A and 300B and an output request value to engine 100 to satisfy the requested vehicle driving power or vehicle braking power, while limiting the charge/discharge of main battery 310 such that charge/discharge is executed within the possible charge/discharge range (Win to Wout) of main battery 310.

As described above, engine 100 is controlled by ECU 400 (engine ECU 406) such that it operates in accordance with the output request value. Further, ECU 400 (MG_ECU 402) controls up-converter 320 and inverter 330 such that motor generators 300A and 300B operate in accordance with the MG request values (typically, torque command values).

Next, referring to Fig. 4, charge/discharge limitation of main battery 310 with respect to increase in battery temperature Tb will be described. Battery temperature Tb increases as main battery generates heat as it is charged/discharged. Therefore, upper limit values Win# and Wout# of charge/discharge power based on the battery temperature are set, for limiting charge/discharge power as the battery temperature increases.

Though upper limit values Win# and Wout# for charge/discharge power are actually represented by a power value (W), here, the values are described as parameters representing degree of limitation, for simplicity of description.

Referring to Fig. 4, where Win# = -1.0 and Wout# = 1.0, charge/discharge limitation based on battery temperature is not executed. Here, the final values Win and Wout are set based on factors (such as SOC) other than the battery temperature, as described above. On the contrary, where Win# = 0 and Wout# = 0, charge/discharge of main battery 310 is inhibited. Here, the final values are Win = 0 and Wout = 0, from the viewpoint of battery temperature, regardless of other factors.

Further, where -1.0 < Win# < 0 and 0 < Wout# < 1.0, charge/discharge power is limited due to the battery temperature. With each of Win# and Wout# being closer to 0, the charge/discharge power is severely limited (the absolute value of charge/discharge power is made smaller). Here, the upper limit values of charge/discharge power set in consideration of battery temperature and other factors are compared with each other, and the upper limit values of smallest absolute values are set as final values Win and Wout.

As described above, setting of upper limit values Win# and Wout# of charge/discharge power shown in Fig. 4 corresponds to control of start and degree (including charge/discharge inhibition as the severest limitation) of charge/discharge limitation of main battery 310 in accordance with the battery temperature increase. Though not shown in the figure as the present invention is focused on charge/discharge limitation to cope with the increase of battery temperature, actually the values Win# and Wout# may be set to limit charge/discharge of main battery 310 in a very low temperature range.

Referring to Fig. 4, Win# and Wout# in accordance with battery temperature Tb are set differently in the catalyst warm-up period and in other periods. By way of example, battery temperature limitation map 430 includes a limitation map 434 used for catalyst warm-up period and a map 432 used for other periods, set separately. Maps 434 and 432 used for catalyst warm-up period and for other periods, respectively, are selectively referred to in accordance with a catalyst warm-up flag FWR. The catalyst warm-up flag FWR is turned on to request catalyst warm-up if the catalyst temperature is lower than a prescribed temperature when start of operation of engine 100 is requested, and once turned on, it is turned off when the catalyst temperature reaches the prescribed temperature (activating temperature).

In the catalyst warm-up period, in accordance with map 434 for catalyst warm-up period, the values are set to Win# = -1.0, Wout# = 1.0 in the temperature range of battery temperature Tb ≤ T1s, and charge/discharge limitation based on battery temperature is not executed. When the battery temperature Tb becomes higher than T1s, limitation of charge/discharge power starts and when battery temperature Tb becomes higher than T1p, the values are set to Win# = 0 and Wout# = 0, and charge/discharge of main battery 310 is inhibited to avoid further increase of battery temperature.

On the contrary, in a period other than the catalyst warm-up period, charge/discharge of main battery 310 is limited from a temperature range lower than in the catalyst warm-up period, in accordance with map 432 for the period other than the catalyst warm-up period. Specifically, in the temperature range of battery temperature Tb ≤ T2s, the values are set to Win# = -1.0 and Wout# = 1.0, and charge/discharge limitation based on battery temperature is not executed. When battery temperature Tb becomes higher than T2s, limitation of charge/discharge power starts, and when battery temperature Tb becomes higher than T2p, the values are set to Win# = 0 and Wout# = 0, and charge/discharge of main battery 310 is inhibited to avoid further increase of battery temperature.

The temperatures T1s and T1p to start limitation of charge/discharge power and to inhibit charge/discharge in the catalyst warm-up period are determined in accordance with battery characteristics of main battery 310. Specifically, T1p corresponds to a management upper limit determined in consideration of deterioration of battery characteristics. On the other hand, T2s and T2p in the periods other than catalyst warm-up period are set to have margins ΔTs (T1s - T2s) and ΔTp (T1p - T2p) with respect to T1s and T1p. Specifically, in Fig. 4, T1s corresponds to the "first temperature," T2s corresponds to the "second temperature," T1p corresponds to the "third temperature," and T2p corresponds to the "fourth temperature." Further, "limitation of charge/discharge" means limitation of charge/discharge power and/or inhibition of charge/discharge.

In this manner, both in the catalyst warm-up period and in other periods, limitation/inhibition of charge/discharge in accordance with battery temperature, preventing battery temperature Tb from exceeding the upper limit of management control reflecting battery characteristics can reliably be executed.

Further, by reducing battery temperature increase by the margin mentioned above in the period other than the catalyst warm-up period, it becomes possible to prevent the battery temperature at the start of catalyst warm-up from reaching the temperature range (Tb > T1s) that requires charge/discharge limitation in the catalyst warm-up period. Further, it becomes possible to prevent failure of normal warm-up caused by limitation of charge/discharge power or inhibition of charge/discharge in the catalyst warm-up period.

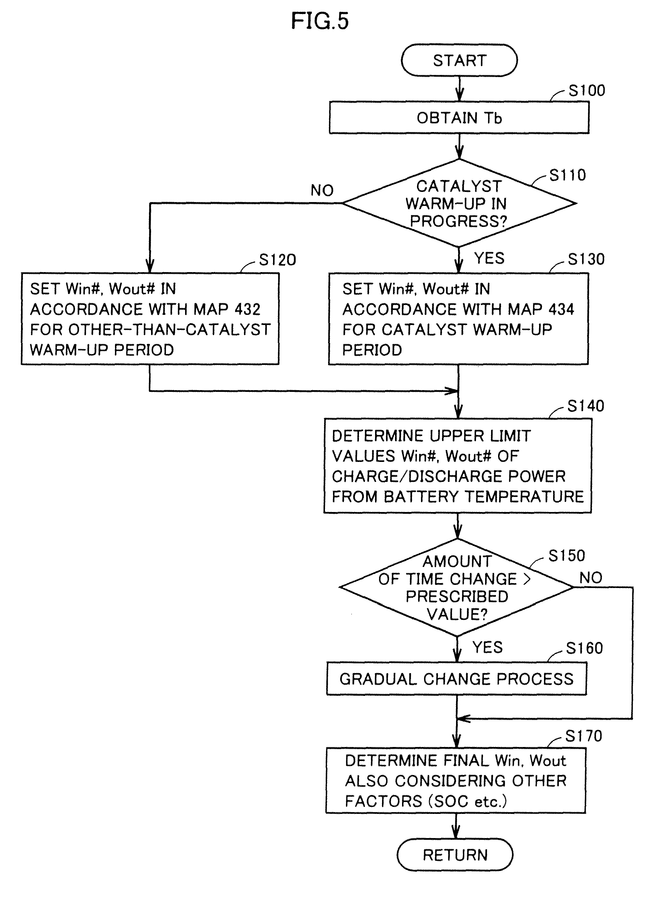

Fig. 5 represents the process for setting an upper limit of charge/discharge power in the hybrid vehicle in accordance with an embodiment of the present invention. The series of processes shown in Fig. 5 corresponds to the function of charge/discharge limit setting unit 420 shown in Fig. 3.

The series of control processes shown in Fig. 5 is activated and executed at every prescribed interval. Further, though each step of the flowchart of Fig. 5 is basically realized through software processing by ECU 400, it may be realized by hardware processing.

Referring to Fig. 5, at step S100, ECU 400 obtains battery temperature Tb based on a signal from monitor unit 340, and at step S110, determines whether or not catalyst warm-up is in progress. The determination at step S110 may be made, for example, based on catalyst warm-up flag FWR.

Other than in the catalyst warm-up period (NO at S110), ECU 400 proceeds to step S120, at which Win# and Wout# are set in accordance with map 432 (Fig. 4) for periods other than the catalyst warm-up period. In the catalyst warm-up period (YES at S110), at step S130, ECU 400 sets Win# and Wout# in accordance with map 434 (Fig. 4) for catalyst warm-up period. Specifically, step S130 corresponds to the step of setting the "first temperature condition" and step S120 corresponds to the step of setting the "second temperature condition."

Then, at step S140, ECU 400 sets upper limits Win# and Wout# of charge/discharge power in accordance with battery temperature Tb, distinguishing the catalyst warm-up period and other period. Further, at step S150, ECU 400 determines whether or not the amount of change of upper limit values Win# or Wout# of charge/discharge power set at step S140 from the set values of the last control period is larger than a prescribed value.

If the amount of change is larger than the prescribed value (YES at S150), ECU 400 performs a gradual change process using, for example, a low-pass filter, so that the amount of change per unit time becomes equal to or smaller than the prescribed value (step S160). Specifically, when the catalyst warm-up is to be terminated or to be started, even if upper limit value Win# or Wout# of charge/discharge power calculated from map 432 or 434 momentarily changes significantly, actual time-change of upper limit of charge/discharge power can be made smooth.

If the amount of change is smaller than the prescribed value (NO at S150), ECU 400 does not execute the gradual change process of step S160. In that case, upper limit values Win# and Wout# of charge/discharge power set at step S140 are directly used.

Further, at step S170, ECU 400 sets the final upper limit values Win and Wout of charge/discharge power in consideration of factors other than the battery temperature as described above, in addition to the upper limit values Win# and Wout# of charge/discharge power based on battery temperature set through steps S100 to S160.

Alternatively, the upper limit values Win# and Wout# of charge/discharge power based on battery temperature may be regarded as modification coefficients set in the range of 0 to 1.0, and the final upper limit values Win and Wout of charge/discharge power may be determined in accordance with products of the modification coefficients and basic upper limit values of charge/discharge power calculated in accordance with SOC.

Next, the effect of charge/discharge control of hybrid vehicle in accordance with the present embodiment will be described in detail.

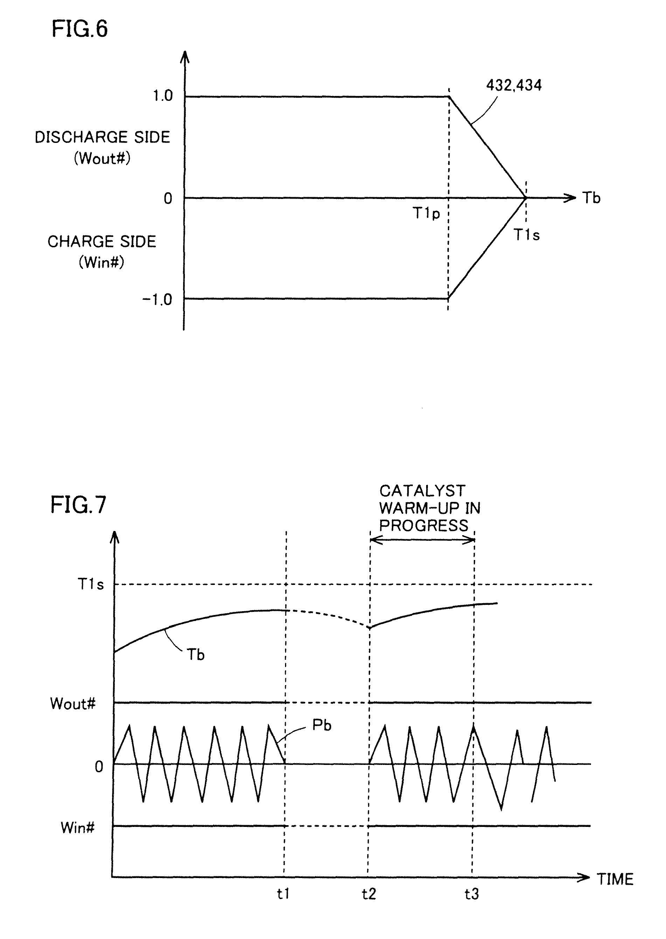

Fig. 6 shows an idea of charge/discharge limitation with respect to the battery temperature increase in accordance with a comparative example of an embodiment.

Referring to Figs. 6 and 4, in the comparative example, charge/discharge is limited in accordance with battery characteristics of main battery 310 in all periods, not particularly distinguishing the catalyst warm-up period from other periods. Specifically, as in the example using map 434 for catalyst warm-up period shown in Fig. 4, charge/discharge limitation of main battery 310 is executed to cope with the battery temperature increase, such that limitation of charge/discharge power starts when Tb > Tips, and charge/discharge is inhibited when Tb>T1p.

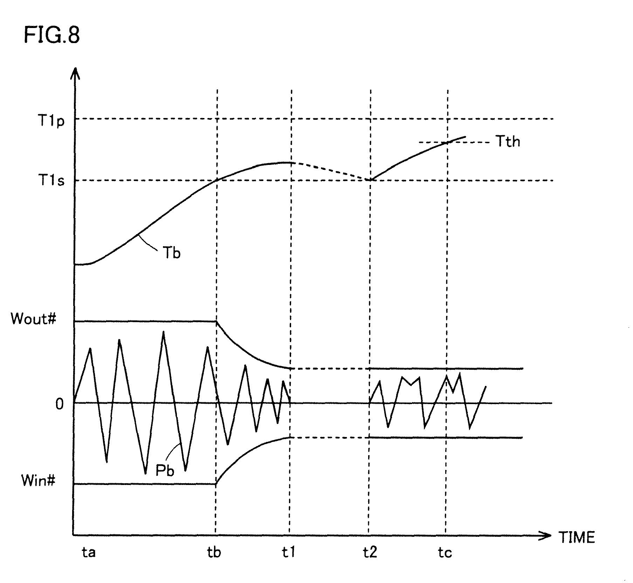

Figs. 7 and 8 show exemplary battery temperature changes when charge/discharge is controlled in accordance with the charge/discharge limitation of Fig. 6. Fig. 7 shows temperature changes when cooling system 315 of main battery operates normally, and Fig. 8 shows temperature changes when cooling system failed.

Referring to Fig. 7, while hybrid vehicle 10 is operating, before a time point t1, battery temperature Tb increases as main battery 3 10 is charged/discharged. It is noted, however, that because of the effect of cooling system 315, battery temperature Tb does not increase to such a temperature range (Tb > T1s) that requires limitation of charge/discharge power Pb from the viewpoint of battery temperature.

When vehicle operation stops at t1, battery temperature Tb generally tends to decrease. Since main battery 310 is commonly mounted not to be exposed to the open air and has relatively high heat capacity, the battery temperature decreases relatively slowly while the vehicle is not operating. On the other hand, catalyst 140 (Fig. 2) is usually arranged to be exposed to the open air and has small heat capacity. Therefore, the catalyst temperature decreases much faster than the battery temperature when the vehicle is not operating. Further, since engine 100 is operated intermittently in accordance with the state of running of hybrid vehicle 10, the temperature of catalyst 140 also decreases when the engine is stopped, even when the vehicle is operating.

Therefore, when operation of hybrid vehicle 10 starts again at t2, catalyst warm-up may possibly be required, depending on the length of time period (t 1 to t2) while the vehicle operation was stopped.

When catalyst warm-up takes place from t2 to t3, the output of engine 100 is reduced in this period, and the vehicle driving power is ensured by the output of motor generator 300B, that is, the electric power from main battery 310. Increase of battery temperature Tb, however, is limited because of the effect of cooling system 315. Therefore, even in the catalyst warm-up period (t2 to t3), battery temperature Tb does not increase to the range that requires charge/discharge limitation. As a result, normal catalyst warm-up can be completed as charge/discharge limitation is not imposed in the catalyst warm-up period.

On the other hand, referring to Fig. 8, assume that malfunction occurs in cooling system 315 because of, for example, failure of cooling fan at time point ta and the cooling capacity is lost. Then, while the vehicle is operating before time point t1, increase of battery temperature Tb resulting from charge/discharge of main battery 310 becomes much higher than in the example of Fig. 7.

At time point tb, battery temperature Tb reaches T1s and, limitation of charge/discharge power starts. Here, change of Win# or Wout# at this time is made smooth by the gradual change process of step S160 (Fig. 5).

Further, at time point t1, vehicle operation stops, and at t2, vehicle operation is resumed under the same conditions as in Fig. 7. Specifically, as the vehicle operation starts from time point t2, catalyst warm-up is requested. Since the battery temperature does not decrease rapidly, the battery temperature at this time point is Tb > T1s. Thus, catalyst warm-up is executed with the charge/discharge power Pb of main battery 310 being limited. In such a situation, the vehicle runs using electric power of main battery 310 as much as possible within the limit of charge/discharge power.

Since cooling system 315 is failed, battery temperature Tb further increases as main battery 310 is used. This leads to severer limitation of charge/discharge power of main battery 310. If a temperature Tth for suspending catalyst warm-up provided before charge/discharge inhibiting temperature T2p is exceeded, catalyst warm-up itself may possibly be stopped.

If such a situation occurs, the required driving power for the vehicle as a whole cannot be covered by the output of motor generator 300A and, therefore, it becomes necessary to use the output of engine 100 for vehicle running, though catalyst warm-up has not been completed. As a result, amount of exhaust gas increases while catalyst temperature is low, and exhaust emission undesirably increases.

In a plug-in type hybrid vehicle having the external charging function, it is possible that main battery 310 is continuously charged until immediately before the start of vehicle operation (immediately before time point t2) by the external power source. If the limitation of charging power when the vehicle is externally charged is executed in accordance with the comparative example of Fig. 6, battery temperature Tb may possibly reach the temperature T1s for starting charge/discharge limitation when catalyst warm-up starts at the start of vehicle operation, as in the case of Fig. 8. Here again, appropriate catalyst warm-up cannot be executed from the same reason as described with reference to Fig. 8 and, therefore, exhaust emission undesirably increases.

Further, in the period after time point t3 in which vehicle operation is continued, catalyst warm-up may be required when engine 100 is automatically stopped and then restarted during intermittent operation of engine 100. It is understood that, in this case also, battery temperature Tb may possibly reach the temperature T1s for starting charge/discharge limitation when catalyst warm-up starts, as in Fig. 8.

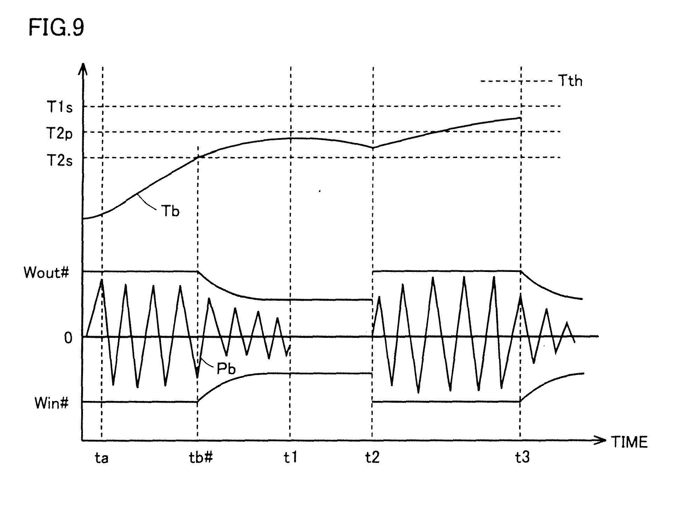

In contrast, Fig. 9 shows exemplary battery temperature changes when charge/discharge is controlled in accordance with the charge/discharge limitation of an embodiment of the invention shown in Fig. 4.

Referring to Fig. 9, assume that malfunction occurs in cooling system 315 at time point ta as in the example of Fig. 8. Consequently, battery temperature Tb increases. In the present embodiment, however, the temperature T2s for starting limitation of charge/discharge power is set lower than T1s in the period other than the catalyst warm-up period. As a result, if battery temperature Tb becomes higher than T2s (T2s < T1s), from the time point tb#, limitation of charge/discharge power Pb starts. Here, gradual change process is executed regarding the time change of upper limits Win# and Wout# of charge/discharge power.

Accordingly, increase of battery temperature Tb after time point tb can be reduced to some extent. Further, if battery temperature Tb becomes higher than T2p, further increase of battery temperature Tb is avoided, as charge/discharge of main battery 310 is inhibited. As a result, charge/discharge can be controlled for the entire period of vehicle operation such that battery temperature Tb is kept lower than T2p.

Therefore, if vehicle operation is stopped at time point t1 and resumed at time point t2 and thereby catalyst warm-up is requested, battery temperature Tb at the start of catalyst warm-up (time point t2) can be set lower than the temperature T1s of starting limitation of charge/ discharge power in the catalyst warm-up period.

As a result, from t2 to t3, catalyst warm-up can be executed in a normal manner without causing charge/discharge limitation of main battery 310. Particularly, by setting the margins ΔTs (T1s - T2s) and ΔTp (T1p - T2p) shown in Fig. 4 to be larger than the expected amount ΔTw of temperature increase of main battery 310 in the catalyst warm-up period (time period from start to normal completion) with cooling system 315 failed, charge/discharge limitation of main battery 310 can more reliably be avoided in the catalyst warm-up period.

It is noted that the expected amount ΔTw of temperature increase can be calculated, for example, by an experiment using an actual machine. However, since the time necessary for catalyst warm-up is typically about one to two minutes and, therefore, the margins ΔTs and ΔTp are not very large. Therefore, as can be understood, availability of main battery 310 other than in the catalyst warm-up period is not much lowered.

When catalyst warm-up ends at time point t3, upper limit values Wout# and Win# of charge/discharge power are again set in accordance with map 432 (Fig. 4) for the period other than the catalyst warm-up period, to be ready for the next catalyst warm-up. Here again, the gradual change process is executed regarding the time change of upper limit values Wout# and Win# of charge/discharge power. As a result, abrupt change in upper limit values of charge/discharge power can be reduced, enabling smooth vehicle behavior.

The gradual change process of upper limit values of charge/discharge power at the start of catalyst warm-up, however, may not be executed as shown at time point t2 of Fig. 9, in order to execute catalyst warm-up with higher priority. Alternatively, conditions for gradual change (time change rate or filter time constant) may be changed at the start and end of catalyst warm-up, such that the time change at the start of catalyst warm-up becomes larger than the time change at the end of catalyst warm-up.

When main battery 310 is externally charged by the external power source in the vehicle operation stopped period (t1 to t2), the charging power is limited in accordance with map 432 for the period other than the catalyst warm-up period (Fig. 4). Therefore, battery temperature Tb when catalyst warm-up is requested at the start of vehicle operation can be made lower than the temperature T1s of starting limitation of charge/discharge power in the catalyst warm-up period, as in the case of Fig. 9. Specifically, in the present embodiment, the "period other other than the catalyst warm-up period" encompasses the vehicle operation stopped period, in addition to the period in which catalyst warm-up is not executed during vehicle operation (including after the completion of catalyst warm-up).

As described above, in the hybrid vehicle in accordance with the present embodiment, the battery temperature at which charge/discharge limitation starts in the period other than the catalyst warm-up period (including the normal running period and external charging period with vehicle operation stopped) is set lower than the original value in accordance with battery characteristics, to be ready for the catalyst warm-up. Therefore, limitation of charge/discharge power resulting from increased battery temperature in the catalyst warm-up period can be prevented. As a result, battery protection for preventing excessive increase of battery temperature is reliably executed, while catalyst warm-up is executed in a normal manner without causing charge/discharge limitation of main battery 310, whereby worsening of exhaust characteristics can surely be prevented.

Particularly, even if cooling system 315 of main battery 310 should fail during or before the start of running and battery temperature tends to increase easily, vehicle running realizing battery protection and avoidance of worsening of exhaust characteristics as described above can be attained without stopping the hybrid system.

The present embodiment has been described assuming that in the catalyst warm-up operation, basically the vehicle driving power is provided by the output of motor generator 300B and the output of engine 100 is reduced to the minimum value necessary for the catalyst warm-up. It is possible, however, to make shorter the time for catalyst warm-up by increasing the output of engine 100 using power generated by motor generator 300A (MG(1)), as proposed in PTL 1.

For instance, if SOC of main battery 310 lowers and the output power to motor generator 300 cannot be ensured, or if battery temperature increases by some cause or other, running control that reduces the time for catalyst warm-up as described above is desirable.

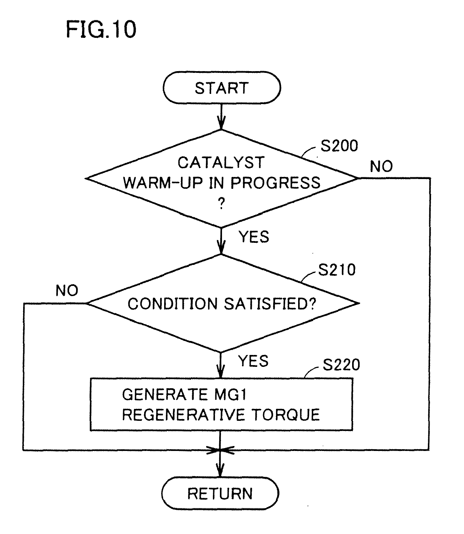

Therefore, it is possible to set the operating conditions in the catalyst warm-up period in accordance with a flowchart of Fig. 10.

Referring to Fig. 10, at step S200, ECU 400 determines whether or not catalyst warm-up is in progress, and if catalyst warm-up is being done (YES at step S200), at step S210, ECU 400 determines whether or not condition for executing catalyst warm-up with the engine output increased are satisfied.

The condition for determination may be defined such that the determination at step S210 is YES if SOC of main battery 310 is low, or if battery temperature has reached the range that requires limitation of charge/discharge.

If the prescribed condition is satisfied (NO at step S210), at step S220, ECU 400 generates regenerative torque of motor generator 300A (MG(1)) in the catalyst warm-up period, so that the output of engine 100 is increased. As a result, heat quantity of exhaust gas transmitted to catalyst 140 (Fig. 2) increases and, therefore, catalyst warm-up can be completed in a shorter time period.

On the other hand, if the prescribed condition is satisfied (NO at step S210), ECU 400 skips step S220. Thus, in the catalyst warm-up period, the output of engine 100 is reduced to minimum amount necessary for catalyst warm-up. In this manner, appropriate operating condition for catalyst warm up can be set in accordance with the vehicle state at the time of catalyst warm-up.

Alternatively, at the time of catalyst warm-up, regenerative torque of motor generator 300B may be generated in accordance with the process of step S220 uniformly to increase the output of engine 100, without switching the operating condition as shown in Fig. 10. By such an approach, the time for catalyst warm-up becomes shorter and the increase in battery temperature in the catalyst warm-up period can be reduced. Therefore, margins ΔTs and ΔTp shown in Fig. 4 can be made smaller. As a result, main battery 310 can be utilized more efficiently in periods other than the catalyst warm-up period.

The embodiments as have been described here are mere examples and should not be interpreted as restrictive. The scope of the present invention is determined by each of the claims with appropriate consideration of the written description of the embodiments and embraces modifications within the meaning of, and equivalent to, the languages in the claims.

### INDUSTRIAL APPLICABILITY

The present invention is applicable to a hybrid vehicle mounting an engine and an electric motor generating vehicle driving power by electric power from a power storage device.

## Claims

1. A controller for a hybrid vehicle (10) mounting an engine (100) and an electric motor (300B) capable of generating vehicle driving power, a catalyst (140) provided on an exhaust system of said engine, and a secondary battery (310) configured to store electric power for driving said electric motor, comprising:
a monitor unit (340) configured to detect temperature of said secondary battery; and
a charge/discharge limit setting unit (420) configured to limit charge/discharge of said secondary battery depending on battery temperature (Tb) detected by said monitor unit increases; wherein
said charge/discharge limit setting unit starts limitation of charge/discharge power of said secondary battery if said battery temperature becomes higher than a first temperature (T1s) in a first time period in which catalyst warm-up is done by exhaust of said engine, and starts limitation of said charge/discharge power if said battery temperature becomes higher than a second temperature (T2s) lower than said first temperature, in a second time period other than the time period of said catalyst warm-up.

2. The controller for a hybrid vehicle according to claim 1, wherein
said charge/discharge limit setting unit (420) inhibits charge/discharge of said secondary battery if said battery temperature becomes higher than a third temperature (T1p) in said first time period, and inhibits charge/discharge of said secondary battery if said battery temperature becomes higher than a fourth temperature (T2p) in said second time period;
said third temperature is higher than said first temperature; and
said fourth temperature is higher than said second temperature and lower than said third temperature.

3. The controller for a hybrid vehicle according to claim 2 wherein said fourth temperature (T2p) is set lower than said first temperature (T1s).

4. The controller for a hybrid vehicle according to claims 1, wherein
said secondary battery is provided with a cooling system (315) configured to reduce temperature increase; and
difference (ΔTs) between said first and second temperatures is set to be larger than expected amount of temperature increase of said secondary battery in said first time period if said cooling system fails.

5. The controller for a hybrid vehicle according to claim 2, wherein
said secondary battery is provided with a cooling system (315) configured to reduce temperature increase; and
difference (ΔTp) between said third and fourth temperatures is set to be larger than expected amount of temperature increase of said secondary battery in said first time period if said cooling system fails.

6. The controller for a hybrid vehicle according to claim 2, 3 or 5, wherein said third temperature (Tp1) corresponds to management upper limit value of said battery temperature (Tb) determined in accordance with characteristics of said secondary battery (310).

7. The controller for a hybrid vehicle according to any one of claims 1 to 5,
wherein
said hybrid vehicle (10) further mounts a charging unit (500) configured to charge said secondary battery (310) by a power source (600) outside the vehicle: and
said second time period includes a charging period for charging said secondary battery by said charging unit.

8. The controller for a hybrid vehicle according to any one of claims 1 to 5,
wherein
said hybrid vehicle (10) further mounts a generator (300A) configured to be capable of generating electric power using power from said engine (100); and
in said first time period, output of said engine is set to include power to be used for electric power generation by said generator.

9. The controller for a hybrid vehicle according to any one of claims 1 to 5,
wherein
in said first time period, driving power of said hybrid vehicle (10) is ensured by output of said electric motor (300B), while output of said engine (100) is set to a
minimum value necessary for said catalyst warm-up.

10. The controller for a hybrid vehicle according to any one of claims 1 to 5,
wherein
said charge/discharge limit setting unit (420) is configured to smooth change in limit value (Win, Wout) of said charge/discharge power in the direction of time axis, in at least one of transitions between said first and second time periods.

11. A method of controlling a hybrid vehicle (10) mounting an engine (100) and an electric motor (300B) capable of generating vehicle driving power, a catalyst (140) provided on an exhaust system of said engine, and a secondary battery (310) configured to store electric power for driving said electric motor, comprising the steps of:
detecting (S100) battery temperature of said secondary battery;
setting (S130) a first temperature condition to start limitation of charge/discharge power of said secondary battery if said battery temperature becomes higher than a first temperature (T1s) in a first time period in which catalyst warm-up is done by exhaust of said engine; and
setting (S120) a second temperature condition to start limitation of said charge/discharge power if said battery temperature becomes higher than a second temperature (T2s) lower than said first temperature, in a second time period other than the time period of said catalyst warm-up.

12. The method of controlling a hybrid vehicle according to claim 11, wherein said step of setting said first temperature condition (S130) further sets said first temperature condition to inhibit charge/discharge of said secondary battery if said battery temperature becomes higher than a third temperature (T1p) in said first time period;
said step of setting said second temperature condition (S120) further sets said second temperature condition to inhibit charge/discharge of said secondary battery if said battery temperature becomes higher than a fourth temperature (T2p) in said second time period;
said third temperature is higher than said first temperature; and
said fourth temperature is higher than said second temperature and lower than said third temperature.

13. The method of controlling a hybrid vehicle according to claim 12, wherein said fourth temperature (T2p) is set lower than said first temperature (T1s).

14. The method of controlling a hybrid vehicle according to claim 11, wherein said secondary battery is provided with a cooling system (315) configured to reduce temperature increase; and
difference (ΔTs) between said first and second temperatures is set to be larger than expected amount of temperature increase of said secondary battery in said first time period if said cooling system fails.

15. The method of controlling a hybrid vehicle according to claim 12, wherein said secondary battery is provided with a cooling system (315) configured to reduce temperature increase; and
difference (ΔTp) between said third and fourth temperatures is set to be larger than expected amount of temperature increase of said secondary battery in said first time period if said cooling system fails.

16. The method of controlling a hybrid vehicle according to claim 12, 13 or 15,
wherein
said third temperature (Tp1) corresponds to management upper limit value of said battery temperature (Tb) determined in accordance with characteristics of said secondary battery (310).
